(19) **Europäisches Patentamt European Patent Office Office européen des brevets**

(11) **EP 4 485 557 A1**

(12) **EUROPEAN PATENT APPLICATION**
published in accordance with Art. 153(4) EPC

(43) Date of publication:
01.01.2025 Bulletin 2025/01

(21) Application number: 22951844.4

(22) Date of filing: 21.12.2022

(51) International Patent Classification (IPC):
$H01M\ 4/13^{(2010.01)}$     $H01M\ 4/62^{(2006.01)}$
$H01M\ 10/0525^{(2010.01)}$

(52) Cooperative Patent Classification (CPC):
Y02E 60/10

(86) International application number:
PCT/CN2022/140684

(87) International publication number:
WO 2024/016587 (25.01.2024 Gazette 2024/04)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 19.07.2022 CN 202210848900

(71) Applicant: Shenzhen Yanyi New Materials Co., Ltd.
Shenzhen, Guangdong 518110 (CN)

(72) Inventors:
• YUE, Min
 Shenzhen, Guangdong 518110 (CN)
• LIU, Jun
 Shenzhen, Guangdong 518110 (CN)
• WANG, Weihua
 Shenzhen, Guangdong 518110 (CN)

(74) Representative: Dantz, Jan Henning et al
Loesenbeck - Specht - Dantz
Patent- und Rechtsanwälte
Am Zwinger 2
33602 Bielefeld (DE)

(54) **WATER-BASED BINDER, AND PREPARATION METHOD THEREFOR AND USE THEREOF**

(57) Disclosed in the present disclosure are a water-based binder, and a preparation method therefor and the use thereof. The water-based binder is a copolymer formed by reacting a polymer metal salt with a polymerizable monomer, wherein the polymerizable monomer comprises a combination of an acrylate monomer and an olefin monomer, and the polymer metal salt is any one or a combination of at least two selected from a phosphoric acid metal salt polymer, a carboxyl metal salt polymer, a sulfonic acid metal salt polymer or a bis-sulfonimide metal salt polymer. In the present application, by means of the design and cooperative interaction of structural units such as a polymer metal salt and a polymerizable monomer, a resulting copolymer chain segment comprises specific repeated structural units, such that the water-based binder has an appropriate swelling characteristic, good bonding properties and lithium-ion conductivity, also has good bonding strength, bonding stability and electrochemical performance, and significantly improves the cycle performance and rate performance of a lithium-ion battery comprising same.

EP 4 485 557 A1

**Description**

**TECHNICAL FIELD**

The embodiments of the present application relate to the technical field of lithium-ion battery materials, and for example, to a water-based binder, a method for preparing same, and use thereof.

**TECHNICAL BACKGROUND**

In recent years, in order to meet the needs of electric instruments and devices, especially the further development of the mobile phone and electric vehicle industries, the performance improvement of lithium-ion batteries is facing great challenges. At present, the market puts forward higher requirements on not only the energy density of lithium-ion batteries, but also fast charging functionality. Binders are one of the major components of the battery electrode plate and are used to connect active substances, conductive agents, and electrode current collectors to impart integral connectivity to them. During the charging and discharging processes, the binder effectively maintains the structural integrity of the electrode, ensures repeated lithiation and delithiation in the electrode materials, and plays an important role in maintaining the cycle performance. The binder has an important influence on the electrical properties of the electrode plate and the battery, and thus lithium-ion batteries with high performance requirements need suitable high-performance binders.

Polyvinylidene fluoride (PVDF) is the most commonly used oily binder in lithium-ion batteries. It has good redox ability and stability, but requires N-methylpyrrolidone (NMP) as the solvent to achieve good dispersion. NMP features a high volatilization temperature, high cost, harm to human health, and a risk of environmental pollution. In addition, PVDF is prone to hydrolysis and thus requires an environment with strictly controlled humidity during the preparation of the electrode plate, which increases the production cost of the battery. Also, PVDF will swell in the electrolyte, thus affecting the reliability and safety of the battery.

Using water-based binders to replace oily binders such as PVDF to meet environmental conservation requirements of the lithium battery production process is one of the current development trends of battery electrode plates. Existing water-based binders include polyacrylic acid (PAA), sodium carboxymethyl cellulose/styrene-butadiene rubber (CMC/SBR), sodium alginate, chitosan, etc. Among them, SBR-based binders are widely used in negative electrode systems due to their small addition amount in the system and strong bonding force between active substances and current collectors. However, the components in the SBR binder have low polarity and poor affinity with highly polar electrolytes. Lithium-ion batteries using SBR-based binders may have poor dynamic performance and unsatisfactory fast charging performance. Moreover, SBR is usually used together with thickener CMC, which has moderate bonding performance and high brittleness and may readily cause cracking in the electrode plates during charging and discharging. Patent No. CN109802139A discloses a water-based binder and a battery. The water-based binder comprises a binder component and a thickening component. The binder component comprises any one of styrene-butadiene latex and polyacrylic acid, and the thickening component comprises one of cyclodextrin and chitosan. The water-based binder can effectively reduce the shuttle effect of intermediates, reduce the risk of falling off, and increase the electrochemical performance of the battery. However, polyacrylic acid has a high glass transition temperature and is relatively hard at room temperature, which can easily lead to hard and brittle electrode plates. Therefore, the water-based PAA binder may lead to cracking during the coating process, defects such as stripes after cold pressing, and powder drop at the bend of the electrode plates during the winding process, thereby restricting its application in batteries. In addition, natural macromolecular materials such as sodium alginate and chitosan perform well in terms of environment conservation and water solubility as binders, but may have many deficiencies in terms of electrochemical performance, mechanical performance, and bonding performance, thus having difficulties in meeting the requirements for application in batteries.

Therefore, it is an urgent need in the art for developing a water-based binder material with excellent bonding performance, rate performance, and cycle performance to meet the application requirements of high-performance electrode plates and lithium-ion batteries.

**SUMMARY OF THE INVENTION**

The following is a summary of the subject matters in detail, which, however, is not intended to limit the claimed scope.

The embodiments of the present application provide a water-based binder, a method for preparing same, and use thereof. Through the design of the polymer metal salt, the polymerizable monomer, and other structural units, the water-based binder possesses excellent bonding performance and lithium ion conductivity and proper swelling properties, and can thus significantly improve the cycle performance and rate performance of batteries when used in battery electrode plates and lithium-ion batteries.

In a first aspect, the embodiments of the present application provide a water-based binder, wherein the water-based binder is a copolymer formed by a polymer metal salt and a polymerizable monomer; the polymerizable monomer comprises a combination of an acrylate monomer and an olefin monomer; the polymer metal salt is selected from any one or a combination of at least two of a metal phosphate polymer, a metal carboxylate polymer, a metal sulfonate polymer, and a metal bissulfonimide polymer. The water-based binder provided by the present application is a copolymer formed by the reaction of a polymer metal salt and a polymerizable monomer. The polymerizable monomer comprises a combination of the acrylate monomer and the olefin monomer with different solubility parameters. Through the design of structural units such as specific polymer metal salts and polymerizable monomers, the formed copolymeric block comprises specific repeated structural units, so as to provide the obtained products with different solubility parameters and the water-based binder with proper swelling properties. Also, the structural segment of the polymer metal salt can enhance the strength and improve the metal salt content in the binder, thus providing the water-based binder with excellent bonding performance and lithium ion conductivity. Through the design of structural units in the copolymer, the water-based binder provided by the present application achieves a good balance among the bonding performance, lithium ion conductivity and swelling properties, and possesses excellent bonding strength, bonding stability and electrochemical performance, thus significantly improving the cycle performance and rate performance of battery electrode plates and lithium-ion batteries comprising the water-based binder. Preferably, the polymer metal salt comprises any one or a combination of at least two of a polymer lithium salt, a polymer sodium salt, a polymer potassium salt, and a polymer magnesium salt.

Preferably, the metal phosphate polymer is selected from any one or a combination of at least two of a metal polyphosphate, a metal 2-hydroxyethyl methacrylate phosphate-based polymer, a metal bis(2-(methacryloyloxy)ethyl) phosphate-based polymer, a metal 2-methacryloyloxyethyl phosphate-based polymer, and a metal vinyl phosphate-based polymer, more preferably, any one or a combination of at least two of lithium polyphosphate, a lithium 2-hydroxyethyl methacrylate phosphate-based polymer, a lithium bis(2-(methacryloyloxy)ethyl)phosphate-based polymer, a lithium 2-methacryloyloxyethyl phosphate-based polymer, and a lithium vinyl phosphate-based polymer.

Preferably, the metal carboxylate polymer is selected from any one or a combination of at least two of a metal methacrylate-based polymer, a metal acrylate-based polymer, a metal maleate-based polymer, a metal itaconate-based polymer, a metal triallyl citrate-based polymer, a metal carboxymethylcellulose-based polymer, and a metal alginate-based polymer, more preferably, any one or a combination of at least two of a lithium methacrylate-based polymer, a lithium acrylate-based polymer, a lithium maleate-based polymer, a lithium itaconate-based polymer, a lithium triallyl citrate-based polymer, a lithium carboxymethylcellulose-based polymer, and a lithium alginate-based polymer.

Preferably, the metal sulfonate polymer is selected from any one or a combination of at least two of a metal styrenesulfonate-based polymer, a metal vinyl sulfonate-based polymer, a metal acrylsulfonate-based polymer, a metal methylallyl sulfonate-based polymer, a metal 4-vinylbenzenesulfinate-based polymer, a metal allyl vinyl sulfonate-based polymer, a metal 3-sulfopropyl methacrylate-based polymer, a metal 2-sulfoethyl methacrylate-based polymer, a metal 2-acrylamido-2-methyl-1-propanesulfonate-based polymer, a metal acrylate-2-acrylamido-2-methylpropanesulfonate-based polymer, and a metal 3-allyloxy-2-hydroxy-1-propane sulfonate-based polymer, more preferably, any one or a combination of at least two of a lithium styrenesulfonate-based polymer, a sodium styrenesulfonate-based polymer, a potassium styrenesulfonate-based polymer, a lithium vinylsulfonate-based polymer, a lithium acrylsulfonate-based polymer, a lithium methylallyl sulfonate-based polymer, a lithium 4-vinylbenzenesulfinate-based polymer, a lithium allyl vinyl sulfonate-based polymer, a lithium 3-sulfopropyl methacrylate-based polymer, a lithium 2-sulfoethyl methacrylate-based polymer, a lithium 2-acrylamido-2-methyl-1-propanesulfonate-based polymer, a lithium acrylate-2-acrylamido-2-methylpropanesulfonate-based polymer, and a lithium 3-allyloxy-2-hydroxy-1-propane sulfonate-based polymer. Preferably, the metal bissulfonimide polymer is selected from a metal vinyl bissulfonimide-based polymer and/or a metal styrene bissulfonimide-based polymer, more preferably, a lithium vinyl bissulfonimide-based polymer and/or a lithium styrene bissulfonimide-based polymer.

In the present application, the "polymer" in the polymer metal salt includes a homopolymer and/or a copolymer. For example, the "metal methacrylate-based polymer" may be a homopolymer of a metal methacrylate or a copolymer of a metal methacrylate and another monomer, as long as the polymer contains a structural unit formed by the metal methacrylate. The other polymers carry similar meanings and are not recited for brevity.

Preferably, the polymer metal salt has a weight-average molecular weight of 1,000-10,000,000. For example, the weight-average molecular weight may be 2,000, 5,000, 8,000, 10,000, 30,000, 50,000, 80,000, 100,000, 300,000, 500,000, 800,000, 1,000,000, 3,000,000, 5,000,000, 7,000,000 or 9,000,000, and specific values between the above values, which are not recited here for brevity.

In the present application, the polymer metal salt may be commercially available or may be acquired by salification of an acidic polymer with a metal via a method known in the art.

Preferably, on the basis of the total mass of the polymer metal salt and the polymerizable monomer, the polymer metal salt has a percentage by mass of 1-90%. For example, the percentage by mass may be 2%, 5%, 8%, 10%, 15%, 20%, 25%, 30%, 35%, 40%, 45%, 50%, 55%, 60%, 65%, 70%, 75%, 80% or 85%, and specific values between the above values, which are not recited here for brevity, more preferably 10-50%.

As a preferred embodiment of the present application, the polymer metal salt has a percentage by mass of 1-90%, more preferably 10-50%. As such, the copolymer formed by the reaction comprises a proper proportion of the polymer metal salt structural segment, provides the water-based binder with excellent bonding performance and lithium ion conductivity and proper swelling properties, such that a lithium-ion battery comprising the water-based binder may have better cycle performance and rate performance. A low percentage by mass of the polymer metal salt may compromise the strength of the water-based binder and increase the swelling rate in electrolytes, leading to an attenuation in the bonding force after long-term use and poor cycle performance of the battery. A high percentage by mass of the polymer metal salt may result in insufficient flexibility of the water-based binder and thus affected processing performance of the electrode plates.

Preferably, the acrylate monomer is an alkyl acrylate and/or an alkyl methacrylate.

Preferably, the "alkyl" group in the alkyl acrylate and the alkyl methacrylate are each independently a linear or branched C1-C10 alkyl group, such as a linear or branched C1, C2, C3, C4, C5, C6, C7, C8, C9, or C10 alkyl group; for example, a C1 alkyl group denotes methyl acrylate or methyl methacrylate, while the others are similarly and thus not recited herein for brevity.

Preferably, the acrylate monomer comprises any one or a combination of at least two of methyl acrylate, methyl methacrylate, ethyl acrylate, ethyl methacrylate, propyl acrylate, propyl methacrylate, butyl acrylate, butyl methacrylate, pentyl acrylate, pentyl methacrylate, hexyl acrylate, hexyl methacrylate, octyl acrylate, isooctyl acrylate, and octyl methacrylate.

Preferably, the olefin monomer comprises any one or a combination of at least two of styrene and a linear or branched C5-C10 (e.g., C5, C6, C7, C8, C9, or C10) olefin. Preferably, the linear or branched C5-C10 (e.g., C5, C6, C7, C8, C9, or C10) olefin, illustratively includes, but is not limited to: pentene, hexene, heptene, octene, nonene, decene, etc., as well as various isomers of the foregoing olefins.

Preferably, the mass ratio of the acrylate monomer to the olefin monomer is (0.5-2): 1. For example, the mass ratio may be 0.6:1, 0.7:1, 0.8:1, 0.9:1, 1:1, 1.1:1, 1.2:1, 1.3:1, 1.4:1, 1.5:1, 1.6:1, 1.7:1, 1.8:1, 1.9:1, etc., more preferably (0.8-1.5):1.

As a preferred embodiment of the present application, the mass ratio of the acrylate monomer to the olefin monomer is (0.5-2):1, more preferably (0.8-1.5):1. As such, the copolymer formed by reaction comprises a polyacrylate structure segment and a polyolefin structure segment in a specific ratio, providing the water-based binder with proper swelling properties, excellent bonding performance, and lithium ion conductivity. By controlling the ratio of the two polymerizable monomers with different solubility parameters, products with different solubility parameters are obtained, such that the swelling performance of the water-based binder in electrolytes can be adjusted, thereby preventing the loss of bonding force due to excessive swelling and the loss of lithium ion conductivity due to insufficient swelling. An excessive amount of the acrylate monomer may lead to excessive swelling of the water-based binder in the electrolytes, and thus attenuated bonding force after long-term use and poor cycle performance of the battery; an excessive amount of the olefin monomer may result in insufficient swelling of the water-based binder, and thus compromised lithium ion conductivity and affected rate performance of battery electrode plates and lithium-ion batteries.

Preferably, the polymerizable monomer further comprises a functional monomer. Preferably, the functional monomer comprises acrylic acid and/or methacrylic acid. Preferably, the percentage by mass of the functional monomer in the polymerizable monomer is ≤ 10%. For example, the percentage by mass may be 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, etc.

As a preferred embodiment of the present application, the polymerizable monomer further comprises a functional monomer for improving the stability of the water-based binder in an emulsion.

In a second aspect, the embodiments of the present application provide a method for preparing the water-based binder according to the first aspect, comprising: mixing the polymer metal salt, the polymerizable monomer, an initiator, and a solvent, and then reacting to give the water-based binder.

Preferably, the initiator comprises a persulfate salt, more preferably ammonium persulfate.

Preferably, on the basis of the mass of the polymerizable monomer, the initiator has a percentage by mass of 0.05-5%. For example, the percentage by mass may be 0.08%, 0.1%, 0.3%, 0.5%, 0.8%, 1%, 1.5%, 2%, 2.5%, 3%, 3.5%, 4% or 4.5%, and specific values between the above values, which are not recited here for brevity.

Preferably, the solvent comprises water.

Preferably, the reaction temperature is 60-80 °C. For example, the reaction temperature may be 61 °C, 63 °C, 65 °C, 68 °C, 70 °C, 71 °C, 73 °C, 75 °C, 77 °C or 79 °C, and specific values between the above values, which are not recited here for brevity. Preferably, the reaction time is 1-12 h. For example, the reaction time may be 2 h, 3 h, 4 h, 5 h, 6 h, 7 h, 8 h, 9 h, 10 h or 11 h, and specific values between the above values, which are not recited here for brevity.

Preferably, the method further comprises a neutralization procedure after the reaction is completed.

Preferably, the agent for neutralization is a lithium hydroxide solution.

In a third aspect, the embodiments of the present application provide use of the water-based binder according to the first aspect in a battery material.

Preferably, the battery material is a lithium-ion battery material.

In a fourth aspect, the embodiments of the present application provide a battery electrode plate, comprising the water-based binder according to the first aspect.

Preferably, the battery electrode plate comprises a current collector and a coating disposed on the current collector, wherein the coating comprises a material comprising the water-based binder according to the first aspect.

Preferably, the material of the coating comprises an active substance, a conductive agent, and the water-based binder according to the first aspect.

Preferably, the battery electrode plate is a negative electrode plate.

In a fifth aspect, the embodiments of the present application provide a lithium-ion battery, comprising at least one of the water-based binder according to the first aspect and the battery electrode plate according to the fourth aspect.

Compared with the related art, the embodiments of the present application have the following beneficial effects: In the water-based binder provided by the embodiments of the present application, through the design and the synergism of the polymer metal salt, the polymerizable monomer, and other structural units, the formed copolymeric block comprises specific repeated structural units, providing the water-based binder with a proper swelling property, excellent bonding performance and lithium ion conductivity, with an adjustable swelling rate (85 °C, 24 h) in electrolytes of 10-100% and a peel stress of 15-30 N/m; the water-based binder also features excellent bonding strength, bonding stability and electrochemical performance, thus significantly improving the cycle performance and rate performance of lithium-ion batteries comprising the water-based binder. When the water-based binder is used in a negative electrode plate, the capacity retention rate of the lithium-ion battery after 100 cycles at room temperature is > 98%, while the 3C capacity retention rate is > 94%, suggesting good cycle performance and rate performance and capability of satisfying the application requirements of high-performance lithium-ion batteries.

Other aspects will be apparent upon reading and understanding the drawings and detailed description.

## DETAILED DESCRIPTION OF THE EMBODIMENTS

The embodiments of the present application are further illustrated with reference to the following specific examples. It will be appreciated by those skilled in the art that the examples are only intended to help understand the present invention and should not be construed as specific limitations to the present application.

As used herein, the terms "comprise", "include", "have" and "contain", or any variations thereof, are intended to encompass a non-exclusive inclusion. For example, a composition, procedure, method, article, or apparatus that comprises a list of elements is not necessarily limited to such elements only, but may include other elements not explicitly listed or inherent to such a composition, procedure, method, article, or apparatus.

The "optional" or "any" means that the subsequently described event may or may not occur, and that the description includes instances where the event occurs and instances where it does not.

The indefinite articles "a" and "an" preceding an element or component of the present application are used without limitation to the number (i.e., the number of occurrences) of the element or component. Thus, "a" or "an" should be interpreted to include one or at least one, and the singular form of an element or component also includes the plural form unless the singular form is clearly indicated.

The term "an embodiment", "some embodiments", "illustratively", "a specific example", or "some examples" used herein means that a specific feature, structure, material, or characteristic described in connection with the embodiment or example is included in at least one embodiment or example of the present application. As used herein, the schematic descriptions of the terms described above do not necessarily refer to the same embodiment or example.

In addition, the technical features according to the embodiments of the present application may be combined with each other as long as they do not conflict with each other.

Example 1

A water-based binder and a method for preparing same: The water-based binder was a copolymer formed by the reaction of lithium polyacrylate (weight-average molecular weight: 10,000; purchased from Macklin) with a polymerizable monomer. The mass ratio of lithium polyacrylate to the polymerizable monomer was 1:2. The polymerizable monomer was a mixture of monomers styrene (St), butyl acrylate (BA), and acrylic acid (AA) containing 50% of styrene, 48% of butyl acrylate, and 2% of acrylic acid in percentage by mass.

The preparation of the water-based binder is as follows: 50 parts by mass of lithium polyacrylate was added into 550 parts by mass of deionized water. The mixture was heated to 70 °C and stirred, before 100 parts by mass of polymerizable monomer (the mixture of monomers described above) and 0.25 part by mass of ammonium persulfate were sequentially added. The reaction system was incubated for 6 h and adjusted to pH 7.0 with a 10% lithium hydroxide solution after the reaction was completed to give the water-based binder.

Example 2

A water-based binder and a method for preparing same, different from those in Example 1 in that lithium polyacrylate was replaced by potassium poly(2-hydroxyethyl methacrylate)phosphate (weight-average molecular weight: 10,000, purchased from Macklin) of the same mass, whereas the other components, proportions, and preparation are the same as those in Example 1.

Example 3

A water-based binder and a method for preparing same, different from those in Example 1 in that lithium polyacrylate was replaced by sodium polystyrene sulfonate (weight-average molecular weight: 10,000, purchased from Macklin) of the same mass, whereas the other components, proportions, and preparation are the same as those in Example 1.

Example 4

A water-based binder and a method for preparing same, different from those in Example 1 in that lithium polyacrylate was replaced by lithium poly(vinyl bissulfonimide) (weight-average molecular weight: 10,000, purchased from Macklin) of the same mass, whereas the other components, proportions, and preparation are the same as those in Example 1.

Example 5

A water-based binder and a method for preparing same, different from those in Example 1 in that the mass ratio of lithium polyacrylate to the polymerizable monomer was 1:49, whereas the other components, proportions, and preparation are the same as those in Example 1.

Example 6

A water-based binder and a method for preparing same, different from those in Example 1 in that the mass ratio of lithium polyacrylate to the polymerizable monomer was 4:1, whereas the other components, proportions, and preparation are the same as those in Example 1.

Example 7

A water-based binder and a method for preparing same, different from those in Example 1 in that the molecular weight of lithium polyacrylate was 100,000, whereas the other components, proportions, and preparation are the same as those in Example 1.

Example 8

A water-based binder and a method for preparing same, different from those in Example 1 in that the molecular weight of lithium polyacrylate was 1,000,000, whereas the other components, proportions, and preparation are the same as those in Example 1.

Example 9

A water-based binder and a method for preparing same, different from those in Example 1 in that the mass ratio of lithium polyacrylate to the polymerizable monomer was 1:1 and the polymerizable monomer was a mixture of monomers styrene, butyl acrylate, and acrylic acid containing 40% of styrene, 52% of butyl acrylate, and 8% of acrylic acid in percentage by mass, whereas the other components, proportions, and preparation are the same as those in Example 1.

Example 10

A water-based binder and a method for preparing same, different from those in Example 1 in that the mass ratio of lithium polyacrylate to the polymerizable monomer was 1:9 and the polymerizable monomer was a mixture of monomers styrene, butyl acrylate, and acrylic acid containing 52% of styrene, 43% of butyl acrylate, and 5% of acrylic acid in percentage by mass, whereas the other components, proportions, and preparation are the same as those in Example 1.

Example 11

A water-based binder and a method for preparing same, different from those in Example 1 in that the polymerizable monomer contained 35% of styrene, 60% of butyl acrylate, and 5% of acrylic acid in percentage by mass, whereas the other components, proportions, and preparation are the same as those in Example 1.

Example 12

A water-based binder and a method for preparing same, different from those in Example 1 in that the polymerizable monomer contained 60% of styrene, 35% of butyl acrylate, and 5% of acrylic acid in percentage by mass, whereas the other components, proportions, and preparation are the same as those in Example 1.

Comparative Example 1

A water-based binder and a method for preparing same: The water-based binder was a copolymer of polymerizable monomers (styrene, butyl acrylate, and acrylic acid) containing 50% of styrene, 48% of butyl acrylate, and 2% of acrylic acid in percentage by mass.
The preparation of the water-based binder is as follows: 50 parts by mass of polymerizable monomers were added into 200 parts by mass of deionized water before 0.25 part by mass of ammonium persulfate was added. The reaction system was incubated at 70 °C for 6 h and adjusted to pH 7.0 with a 10% lithium hydroxide solution after the reaction was completed to give the water-based binder.

Comparative Example 2

A water-based binder and a method for preparing same, different from those in Example 1 in that the polymerizable monomer was a mixture of monomers styrene and acrylic acid containing 98% of styrene and 2% of acrylic acid in percentage by mass, whereas the other components, proportions, and preparation are the same as those in Example 1.

Comparative Example 3

A water-based binder and a method for preparing same, different from those in Example 1 in that the polymerizable monomer was a mixture of monomers butyl acrylate and acrylic acid containing 98% of butyl acrylate and 2% of acrylic acid in percentage by mass, whereas the other components, proportions, and preparation are the same as those in Example 1.

Comparative Example 4

A water-based binder and a method for preparing same: The water-based binder was a copolymer formed by the reaction of lithium acrylate (LiAA) with a polymerizable monomer. The mass ratio of lithium acrylate to the polymerizable monomer was 1:2. The polymerizable monomer was a mixture of monomers styrene, butyl acrylate, and acrylic acid containing 50% of styrene, 48% of butyl acrylate, and 2% of acrylic acid in percentage by mass.
The preparation of the water-based binder is as follows: 50 parts by mass of lithium acrylate and 100 parts by mass of polymerizable monomer were added into 550 parts by mass of deionized water before 0.75 part by mass of ammonium persulfate was added. The reaction system was incubated at 70 °C for 6 h and adjusted to pH 7.0 with a 10% lithium hydroxide solution after the reaction was completed to give the water-based binder.

Comparative Example 5

A water-based binder and a method for preparing same: The water-based binder was a mixture of lithium polyacrylate and a terpolymer of styrene-butyl acrylate-acrylic acid. The mass ratio of the lithium polyacrylate to the terpolymer was 1:2. The polymeric monomers of the terpolymer contained 50% of styrene, 48% of butyl acrylate, and 2% of acrylic acid in percentage by mass.
The preparation of the water-based binder is as follows: 100 parts by mass of the polymeric monomers of the terpolymer were added into 500 parts by mass of deionized water before 0.25 part by mass of ammonium persulfate was added. The reaction system was incubated at 70 °C for 6 h and adjusted to pH 7.0 with a 10% lithium hydroxide solution after the reaction was completed. 50 parts by mass of lithium polyacrylate was added into the system, and the system was uniformly stirred at room temperature to give the water-based binder.

Comparative Example 6

A commercially available water-based binder SBR.

Comparative Example 7

A commercially available water-based binder LA132.

Application Example

A battery electrode plate: The battery electrode plate was a negative electrode plate, and contained a current collector (Cu foil) and a coating disposed on the current collector. The materials of the coating included a negative active substance (silicon oxide material SiO-450, BTR New Energy Material Group Co., Ltd., 10% silicon content), a conductive agent (carbon black SP), a binder, and a thickener (sodium carboxymethyl cellulose CMC), and the water-based binder was those provided by Examples 1-12 and Comparative Examples 1-7.

The preparation of the negative electrode plate is as follows: The negative electrode active substance, conductive agent, binder, and thickener were mixed in a mass ratio of 96.5:1.0:1.0:1.5. The mixture was added into deionized water as per a final solid proportion of 40 wt% in the system. The mixture was uniformly stirred to give a homogenous negative electrode slurry. The homogenous negative electrode slurry was filtered through a 100-mesh sieve, applied to the negative electrode current collector Cu foil, dried, and pressed with a roller at a load per unit length of $10 \times 10^4$ N/m to give the negative electrode plate.

A lithium-ion battery: The lithium-ion battery contained a positive electrode plate, a negative electrode plate, a separator, and an electrolyte. The negative electrode plate was the negative electrode plate described above. The preparation of the battery is as follows:

(1) Preparation of positive electrode plate: The positive electrode active substance (lithium iron phosphate), conductive agent carbon black, and binder (PVDF) were mixed in a mass ratio of 96.5:2.0:2.5 on solid basis. The mixture was added into *N*-methylpyrrolidone (NMP) as per a final solid proportion of 50 wt% in the system. The mixture was uniformly stirred to give a homogenous positive electrode slurry. The homogenous positive electrode slurry was filtered through a 100-mesh sieve, applied to the positive electrode current collector Al foil, dried, and pressed with a roller at a load per unit length of $10 \times 10^4$ N/m to give the positive electrode plate;

(2) Negative electrode plate: as described above;

(3) Separator: A PE porous polymer film (Shenzhen Senior Technology Material Co., Ltd.) was used as the separator;

(4) Assembly of lithium-ion battery: The positive electrode plate, separator, and negative electrode plate were sequentially wound to give a battery cell. The battery cell was encapsulated by using an aluminum-plastic film and dried, and the electrolyte was injected. The battery cell was then subjected to vacuum sealing, resting, formation, secondary sealing, shaping and other processes to give the lithium-ion battery.

Performance testing:

(1) Swelling performance

The water-based binder was dropwise added into a clean mold in a solid content of 4 g±0.1 g. The mold was then dried in an oven for 12 h at 70 °C. The product was cut into pieces of 1 cm × 1 cm and dried for 2 h at 120 °C for later use. A prepared film piece was weighed, and the mass was recorded as $M_1$. About 5 g of electrolyte was added into a glass flask containing the film piece described above until the film piece was completely immersed in the electrolyte. The flask was sealed and incubated in a water bath at 85 °C for 24 h. The film piece was taken out of the glass flask, and the electrolyte on the film piece was removed with clean dust-free paper. The swollen film piece was weighed and the mass was recorded as $M_2$.

$$\text{Swelling rate} = 100\% \times (M_2 - M_1)/M_1.$$

(2) Bonding performance

The negative electrode plate was cut into 20 cm × 2.5 cm strips. The strip was bonded to a steel plate having a thickness of 1 mm at the current collector side with a double-sided tape, and a transparent tape was attached to the coating side. The coating was peeled off at a speed of 100 mm/min by a tensile tester at 180°, and the peel stress was measured.

For the bonding performance, a higher peel stress indicates better performance.

(3) Cycle performance and rate performance of the battery

The prepared lithium-ion battery was charged to 4.2 V at a constant current of 0.33 C, then charged at a constant voltage until a cut-off current of 0.02 C, and discharged to 2.5 V at 0.33 C. The battery was then let stand for 5 min, charged to 4.2 V at a constant current of 0.33 C, charged at a constant voltage until a cut-off current of 0.02 C, and discharged to 2.5 V at 0.33 C, thus completing the initial adjustment;

At 25 °C, the lithium-ion battery after the initial adjustment was charged to 4.2 V at a constant current of 0.5 C, charged at a constant voltage until a cut-off current of 0.02 C, let stand for 5 min, discharged to 2.5 V at a constant current of 1 C, and let stand for 5 min, before the first-cycle discharge capacity was determined. After 100 charge/discharge cycles, the 100-cycle discharge capacity was determined, and the 100-cycle capacity retention rate was calculated by the following formula:

100-cycle capacity retention rate (%) = 100% × 100-cycle discharge capacity/first-cycle discharge capacity.

Rate performance: At 25 °C, the lithium-ion battery after the initial adjustment was charged to 4.2 V at a constant current of 0.5 C, charged at a constant voltage until a cut-off current of 0.02 C, let stand for 5 min, discharged to 2.5 V at a constant current of 1 C, and let stand for 5 min, before the 1C discharge capacity was determined. The lithium-ion battery was then charged to 4.2 V at a constant current of 0.5 C, charged at a constant voltage until a cut-off current of 0.02 C, let stand for 5 min, discharged to 2.5 V at a constant current of 3 C, and let stand for 5 min, before the discharge capacity at a rate of 3 C was determined.

3C capacity retention rate (%) = 100% × 3C discharge capacity/1C discharge capacity. The results of the performance tests are shown in Tables 1 and 2.

Table 1

| Water-based binder | Polymer metal salt | Polymerizable monomer | Polymer metal salt:polymerizable monomer (by mass) | Swelling rate (%) |
|---|---|---|---|---|
| Example 1 | Lithium polyacrylate (10,000) | St/BA/AA =50/48/2 | 1:2 | 40 |
| Example 2 | Potassium poly(2-hydroxyethyl methacrylate)phosphate | St/BA/AA =50/48/2 | 1:2 | 45 |
| Example 3 | Sodium polystyrene sulfonate | St/BA/AA =50/48/2 | 1:2 | 44 |
| Example 4 | Lithium poly(vinyl bissulfonimide) | St/BA/AA =50/48/2 | 1:2 | 43 |
| Example 5 | Lithium polyacrylate (10,000) | St/BA/AA =50/48/2 | 1:49 | 100 |
| Example 6 | Lithium polyacrylate (10,000) | St/BA/AA =50/48/2 | 4:1 | 10 |
| Example 7 | Lithium polyacrylate (100,000) | St/BA/AA =50/48/2 | 1:2 | 35 |
| Example 8 | Lithium polyacrylate (1,000,000) | St/BA/AA =50/48/2 | 1:2 | 30 |
| Example 9 | Lithium polyacrylate (10,000) | St/BA/AA =40/52/8 | 1:1 | 23 |
| Example 10 | Lithium polyacrylate (10,000) | St/BA/AA =52/43/5 | 1:9 | 72 |

(continued)

| Water-based binder | Polymer metal salt | Polymerizable monomer | Polymer metal salt:polymerizable monomer (by mass) | Swelling rate (%) |
|---|---|---|---|---|
| Example 11 | Lithium polyacrylate (10,000) | St/BA/AA =35/60/5 | 1:2 | 48 |
| Example 12 | Lithium polyacrylate (10,000) | St/BA/AA =60/35/5 | 1:2 | 38 |
| Comparative Example 1 | -- | St/BA/AA =50/48/2 | -- | 200 |
| Comparative Example 2 | Lithium polyacrylate (10,000) | St/AA =98/2 | 1:2 | 22 |
| Comparative Example 3 | Lithium polyacrylate (10,000) | BA/AA =98/2 | 1:2 | 56 |
| Comparative Example 4 | -- | LiAA/St/BA/AA =50/50/48/2 | -- | 54 |
| Comparative Example 5 | Lithium polyacrylate (10,000) | St/BA/AA =50/48/2 | 1:2 | 66 |
| Comparative Example 6 | SBR binder | | | 100 |
| Comparative Example 7 | LA132 binder | | | 10 |

In Table 1, "--" denotes that the component or the data was absent.

Table 2

| Water-based binder | Bonding performance (N/m) | Cycle performance (%) | Rate performance (%) |
|---|---|---|---|
| Example 1 | 20 | 98.1 | 95.4 |
| Example 2 | 22 | 98.2 | 95.5 |
| Example 3 | 23 | 98.3 | 95.4 |
| Example 4 | 25 | 98.4 | 95.4 |
| Example 5 | 15 | 97.5 | 94.0 |
| Example 6 | 28 | 98.7 | 96.3 |
| Example 7 | 25 | 98.5 | 95.3 |
| Example 8 | 30 | 99 | 95.3 |
| Example 9 | 17 | 97.6 | 95.5 |
| Example 10 | 28 | 98.7 | 94.5 |
| Example 11 | 19 | 97.7 | 94.4 |
| Example 12 | 17 | 97.5 | 94.0 |
| Comparative Example 1 | 10 | 97 | 90 |
| Comparative Example 2 | 9 | 96.8 | 89.1 |
| Comparative Example 3 | 8 | 96.6 | 89.9 |
| Comparative Example 4 | 7 | 96.3 | 90.5 |
| Comparative Example 5 | 8 | 96.7 | 91.1 |
| Comparative Example 6 | 10 | 95 | 85.9 |

(continued)

| Water-based binder | Bonding performance (N/m) | Cycle performance (%) | Rate performance (%) |
|---|---|---|---|
| Comparative Example 7 | 12 | 96 | 87.8 |

As can be seen from the performance test data in Tables 1 and 2, compared with the commercially available water-based binders SBR (Comparative Example 6) and LA132 (Comparative Example 7), the water-based binders provided by the present application exhibited proper swelling properties, an adjustable swelling rate in the range of 10-100% after immersed in electrolytes for 24 h at 85 °C, and good bonding performance and lithium ion conductivity through the design and the synergism of the structural units of the polymer metal salt and polymerizable monomer. The binder, when applied to a negative electrode plate, has a peel stress of 15-30 N/m and thus a significantly improved bonding strength compared with the commercially available water-based binders, as well as good lithium ion conductivity, rate performance and cycle performance, and provides lithium-ion batteries containing the water-based binder with a 100-cycle capacity retention rate of 97.5-99% at room temperature and a 3C capacity retention rate of 94-96.3%, showing significantly improved cycle performance and rate performance. Also, by adjusting the ratio of the polymer metal salt and the polymerizable monomer and the design of the proportions of the acrylate monomer and the olefin monomer in the polymerizable monomer, the performance of the water-based binder can be adjusted and optimized.

The water-based binder provided by the present application is a copolymer formed by the reaction of a polymer metal salt and a polymerizable monomer. The polymerizable monomer comprises an acrylate monomer and an olefin monomer. Through the design of the structural units in the copolymer, the water-based binder keeps a good balance among the bonding performance, lithium ion conductivity, and swelling properties, prevents the loss of bonding force due to excessive swelling and the loss of lithium ion conductivity due to insufficient swelling, and possesses excellent bonding strength, bonding stability, and electrochemical performance. If the water-based binder contains no polymer metal salt structural unit (Comparative Example 1), the water-based binder may have an excessive swelling rate in electrolytes and insufficient bonding strength and lithium ion conductivity, leading to significantly compromised cycle performance and rate performance of the battery; if the polymerizable monomer contains no acrylate monomer (Comparative Example 2), the water-based binder may have poor bonding performance, leading to poor cycle and rate performance of the battery; if the polymerizable monomer contains no olefin monomer (Comparative Example 3), the water-based binder may reduce performance, leading to a reduced capacity retention rate and poor cycle performance of the lithium-ion battery. Furthermore, if the polymer metal salt and the styrene-butyl acrylate-acrylic acid terpolymer are present in the binder in a blended form (Comparative Example 5), or a metal salt having a double bond is copolymerized with other polymerizable monomers (Comparative Example 4), a copolymer having a specific repeating unit and copolymeric block structure may not be formed, resulting in low bonding strength of the water-based binder and poor cycle performance of the battery.

It should be noted that the above examples of the water-based binder, the method for preparing same, and use thereof are illustrative of the present application, rather than limiting the present application. That is, the present application is not necessarily implemented as per the above examples. It will be appreciated by those skilled in the art that any modifications to the present application, equivalent substitutions of the starting materials of the product of the present application and the addition of auxiliary components, selections of specific modes, etc., are within the scope and disclosure of the present application.

**Claims**

1. A water-based binder, wherein the water-based binder is a copolymer formed by a polymer metal salt and a polymerizable monomer; the polymerizable monomer comprises a combination of an acrylate monomer and an olefin monomer; the polymer metal salt is selected from any one or a combination of at least two of a metal phosphate polymer, a metal carboxylate polymer, a metal sulfonate polymer, and a metal bissulfonimide polymer.

2. The water-based binder according to claim 1, wherein the polymer metal salt comprises any one or a combination of at least two of a polymer lithium salt, a polymer sodium salt, a polymer potassium salt, and a polymer magnesium salt.

3. The water-based binder according to claim 1 or 2, wherein the metal phosphate polymer is selected from any one or a combination of at least two of a metal polyphosphate, a metal 2-hydroxyethyl methacrylate phosphate-based polymer, a metal bis(2-(methacryloyloxy)ethyl)phosphate-based polymer, a metal 2-methacryloyloxyethyl phosphate-based polymer, and a metal vinyl phosphate-based polymer.

4. The water-based binder according to any one of claims 1-3, wherein the metal carboxylate polymer is selected from any one or a combination of at least two of a metal methacrylate-based polymer, a metal acrylate-based polymer, a metal maleate-based polymer, a metal itaconate-based polymer, a metal triallyl citrate-based polymer, a metal carboxymethylcellulose-based polymer, and a metal alginate-based polymer.

5. The water-based binder according to any one of claims 1-4, wherein the metal sulfonate polymer is selected from any one or a combination of at least two of a metal styrenesulfonate-based polymer, a metal vinylsulfonate-based polymer, a metal acrylsulfonate-based polymer, a metal methylallyl sulfonate-based polymer, a metal 4-vinylbenzenesulfinate-based polymer, a metal allyl vinyl sulfonate-based polymer, a metal 3-sulfopropyl methacrylate-based polymer, a metal 2-sulfoethyl methacrylate-based polymer, a metal 2-acrylamido-2-methyl-1-propanesulfonate-based polymer, a metal acrylate-2-acrylamido-2-methylpropanesulfonate-based polymer, and a metal 3-allyloxy-2-hydroxy-1-propane sulfonate-based polymer;
preferably, the metal bissulfonimide polymer is selected from a metal vinyl bissulfonimide-based polymer and/or a metal styrene bissulfonimide-based polymer.

6. The water-based binder according to any one of claims 1-5, wherein the polymer metal salt has a weight-average molecular weight of 1,000-10,000,000;
preferably, on the basis of the total mass of the polymer metal salt and the polymerizable monomer, the polymer metal salt has a percentage by mass of 1-90%, more preferably 10-50%.

7. The water-based binder according to any one of claims 1-6, wherein the acrylate monomer is an alkyl acrylate and/or an alkyl methacrylate;

    preferably, the acrylate monomer comprises any one or a combination of at least two of methyl acrylate, methyl methacrylate, ethyl acrylate, ethyl methacrylate, propyl acrylate, propyl methacrylate, butyl acrylate, butyl methacrylate, pentyl acrylate, pentyl methacrylate, hexyl acrylate, hexyl methacrylate, octyl acrylate, isooctyl acrylate, and octyl methacrylate;
    preferably, the olefin monomer comprises any one or a combination of at least two of styrene and a linear or branched C5-C10 olefin;
    preferably, the mass ratio of the acrylate monomer to the olefin monomer is (0.5-2): 1, more preferably (0.8-1.5):1.

8. The water-based binder according to any one of claims 1-7, wherein the polymerizable monomer further comprises a functional monomer;

    preferably, the functional monomer comprises acrylic acid and/or methacrylic acid;
    preferably, the percentage by mass of the functional monomer in the polymerizable monomer is ≤ 10%.

9. A method for preparing the water-based binder according to any one of claims 1-8, comprising: mixing the polymer metal salt, the polymerizable monomer, an initiator, and a solvent, and then reacting to give the water-based binder.

10. The method according to claim 9, wherein the initiator comprises a persulfate salt, preferably ammonium persulfate.

11. The method according to claim 9 or 10, wherein on the basis of the mass of the polymerizable monomer, the initiator has a percentage by mass of 0.05-5%; preferably, the solvent comprises water;

    preferably, the reaction temperature is 60-80 °C;
    preferably, the reaction time is 1-12 h;
    preferably, the method further comprises a neutralization procedure after the reaction is completed.

12. Use of the water-based binder according to any one of claims 1-8 in a battery material.

13. A battery electrode plate, comprising the water-based binder according to any one of claims 1-8.

14. The battery electrode plate according to claim 13, comprising a current collector and a coating disposed on the current collector, wherein the coating comprises a material comprising the water-based binder according to any one of claims 1-8; preferably, the battery electrode plate is a negative electrode plate.

15. A lithium-ion battery, comprising at least one of the water-based binder according to any one of claims 1-8 and the battery electrode plate according to claim 13 or 14.

## INTERNATIONAL SEARCH REPORT

| International application No. |
|---|
| **PCT/CN2022/140684** |

### A. CLASSIFICATION OF SUBJECT MATTER

H01M4/13(2010.01)i;H01M4/62(2006.01)i;H01M10/0525(2010.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 负极, 阳极, 电极, 粘结, 粘合, 聚合, 共聚, 单体, 磷酸, 磺酸, 丙烯酸, 酯, negative, electrode, anode, bind+, polymer+, copolymer, monomer, sulfonic acid, phosphoric acid, acrylate, acrylic, ester

### C. DOCUMENTS CONSIDERED TO BE RELEVANT

| Category* | Citation of document, with indication, where appropriate, of the relevant passages | Relevant to claim No. |
|---|---|---|
| PX | CN 115050922 A (SHENZHEN YANYI NEW MATERIAL CO., LTD.) 2022-09-13 (2022-09-13)<br>    description, paragraphs [0007]-[0045] | 1-15 |
| X | CN 113795526 A (NINGDE AMPEREX TECHNOLOGY LTD.) 2021-12-14 (2021-12-14)<br>    description, paragraphs 48-146 | 1-15 |
| X | CN 111057184 A (XUANCHENG YANYI NEW ENERGY TECHNOLOGY CO., LTD. et al.) 2020-04-24 (2020-04-24)<br>    description, paragraphs 36-70 | 1-5 |
| A | CN 107112502 A (SANYO ELECTRIC CO., LTD.) 2017-08-29 (2017-08-29)<br>    entire document | 1-15 |
| A | CN 111864208 A (SAMSUNG SDI CO., LTD.) 2020-10-30 (2020-10-30)<br>    entire document | 1-15 |
| A | CN 114583173 A (EVE ENERGY CO., LTD.) 2022-06-03 (2022-06-03)<br>    entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 April 2023** | **12 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
| --- |
| **PCT/CN2022/140684** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2021017587 A (IDEMITSU KOSAN CO., LTD.) 2021-02-15 (2021-02-15)<br>entire document | 1-15 |

Form PCT/ISA/210 (second sheet) (July 2022)

| INTERNATIONAL SEARCH REPORT<br>Information on patent family members | | | | International application No.<br>**PCT/CN2022/140684** | | | |
|---|---|---|---|---|---|---|---|
| Patent document<br>cited in search report | | | Publication date<br>(day/month/year) | Patent family member(s) | | | Publication date<br>(day/month/year) |
| CN | 115050922 | A | 13 September 2022 | None | | | |
| CN | 113795526 | A | 14 December 2021 | WO | 2022155830 | A1 | 28 July 2022 |
| CN | 111057184 | A | 24 April 2020 | None | | | |
| CN | 107112502 | A | 29 August 2017 | US | 2018013131 | A1 | 11 January 2018 |
| | | | | WO | 2016121322 | A1 | 04 August 2016 |
| | | | | JPWO | 2016121322 | A1 | 02 November 2017 |
| CN | 111864208 | A | 30 October 2020 | US | 2020343556 | A1 | 29 October 2020 |
| | | | | US | 11575133 | B2 | 07 February 2023 |
| | | | | EP | 3736893 | A1 | 11 November 2020 |
| | | | | KR | 20200125503 | A | 04 November 2020 |
| | | | | JP | 2020184414 | A | 12 November 2020 |
| CN | 114583173 | A | 03 June 2022 | None | | | |
| JP | 2021017587 | A | 15 February 2021 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109802139 A